# EUROPEAN PATENT APPLICATION

(11) **EP 4 640 509 A1**
(43) Date of publication of application: **29.10.2025**
(21) Application number: 25162686.7
(22) Date of filing: 10.03.2025
(51) Int. Cl.: B60W 30/16, B60K 35/28, B60K 35/81, B60W 30/18

(54) **IN-VEHICLE DISPLAY DEVICE**

(30) Priority: 24.04.2024 JP 2024070412
(71) Applicant: TOYOTA JIDOSHA KABUSHIKI KAISHA, Toyota-shi, Aichi-ken, 471-8571 (JP)
(72) Inventor: ITO, Hironori, Chuo-ku,, 103-0022 (JP)
(74) Representative: D Young & Co LLP

(57) **Abstract**

An in-vehicle display device displays, on a display, a set vehicle-to-vehicle distance indicator indicating a set vehicle-to-vehicle distance of vehicle-to-vehicle distance control between a preceding vehicle and a host vehicle. The in-vehicle display device includes an operation determination unit configured to determine whether or not a lane change operation of the host vehicle is being performed, and a display controller configured to display, on the display, a host vehicle icon, a set vehicle-to-vehicle distance indicator displayed in front of the host vehicle icon, and a lane marking. The display controller is configured not to display the set vehicle-to-vehicle distance indicator until the lane change is completed when it is determined that the lane change operation of the host vehicle is being performed.

## Description

### CROSS-REFERENCE TO RELATED APPLICATIONS

This application is based upon and claims the benefit of priority from Japanese Patent Application No. 2024-070412, filed on April 24, 2024, the entire contents of which are incorporated herein by reference.

### BACKGROUND

### Field

The present disclosure relates to an in-vehicle display device that displays, on a display, a set vehicle-to-vehicle distance indicator in vehicle-to-vehicle distance control of controlling a vehicle-to-vehicle distance with a preceding vehicle in a host vehicle capable of executing the vehicle-to-vehicle distance control.

### Description of the Related Art

For example, Japanese Unexamined Patent Publication No. 2021-028777 discloses a device capable of executing vehicle-to-vehicle distance control of controlling a vehicle speed of a host vehicle to maintain a set vehicle-to-vehicle distance between the host vehicle and a preceding vehicle. In this device, on a display, a set vehicle-to-vehicle distance indicator indicating the set vehicle-to-vehicle distance in the vehicle-to-vehicle distance control is displayed in front of a host vehicle icon. As a result, a driver of the host vehicle can understand the set vehicle-to-vehicle distance between the preceding vehicle and the host vehicle based on the set vehicle-to-vehicle distance indicator displayed in front of the host vehicle icon.

### SUMMARY

In the above-described device, the set vehicle-to-vehicle distance indicator, lane markings of a traveling lane, and the host vehicle icon may be displayed on the display. In this case, when the host vehicle performs lane change, the host vehicle icon also moves to cross the lane marking. Here, the vehicle-to-vehicle distance control with respect to the preceding vehicle is executed while the host vehicle is traveling in the traveling lane. Therefore, when the set vehicle-to-vehicle distance indicator of the vehicle-to-vehicle distance control is displayed in front of the host vehicle icon on the display even though the host vehicle icon is crossing the lane marking of the traveling lane, an occupant of the host vehicle may feel a sense of discomfort.

Therefore, the present disclosure describes an in-vehicle display device capable of displaying a set vehicle-to-vehicle distance indicator with respect to a preceding vehicle in vehicle-to-vehicle distance control while reducing any sense of discomfort felt by an occupant.

An aspect of the present disclosure relates to [1] "An in-vehicle display device that displays, on an in-vehicle display, a set vehicle-to-vehicle distance indicator indicating a set vehicle-to-vehicle distance in a host vehicle capable of executing vehicle-to-vehicle distance control of controlling a vehicle speed such that a vehicle-to-vehicle distance with a preceding vehicle is the set vehicle-to-vehicle distance, the in-vehicle display device including: an operation determination unit configured to determine whether or not a lane change operation that is an operation of changing a lane in which the host vehicle travels from a host lane to an adjacent lane is being performed; and a display controller having a function of displaying, on the display, a host vehicle icon indicating the host vehicle, the set vehicle-to-vehicle distance indicator displayed in front of the host vehicle icon, and a lane marking of a traveling lane, the display controller being configured to change relative display positions of the host vehicle icon and the lane marking in response to lane change of the host vehicle, in which the display controller is configured not to display the set vehicle-to-vehicle distance indicator until the lane change is completed when the operation determination unit determines that the lane change operation is being performed".

When it is determined that the host vehicle is performing the lane change operation, the in-vehicle display device does not display the set vehicle-to-vehicle distance indicator on the display until the lane change is completed. That is, when the host vehicle icon is crossing the lane marking of the traveling lane on the display, the set vehicle-to-vehicle distance indicator is not displayed in front of the host vehicle icon. Then, when the lane change of the host vehicle is completed, the in-vehicle display device displays the set vehicle-to-vehicle distance indicator display in front of the host vehicle icon. As a result, the in-vehicle display device can display the set vehicle-to-vehicle distance indicator with respect to the preceding vehicle in the vehicle-to-vehicle distance control while reducing any sense of discomfort felt by an occupant.

The aspect of the present disclosure may be [2] "The in-vehicle display device according to [1], in which the display controller is configured not to display the set vehicle-to-vehicle distance indicator until the lane change is completed, even if the vehicle-to-vehicle distance control is being executed when the operation determination unit determines that the lane change operation is being performed".

The aspect of the present disclosure may be [3] "The in-vehicle display device according to [1] or [2], in which the lane change operation includes at least one of an operation of the host vehicle crossing the lane marking, an operation of a turn signal lever of the host vehicle, and a start of execution of lane change control of automatically performing the lane change".

The aspect of the present disclosure may be [4] "The in-vehicle display device according to any one of [1] to [3], further including: a change prohibition unit configured to, when the operation determination unit determines that the lane change operation is being performed, prohibit change of the set vehicle-to-vehicle distance until the lane change is completed".

The aspect of the present disclosure may be [5] "The in-vehicle display device according to any one of [1] to [4], in which the display controller is configured to, when the operation determination unit determines that the lane change operation is being performed, display a change-unavailable indicator indicating that the set vehicle-to-vehicle distance is not changeable".

According to the various aspects of the present disclosure, it is possible to display a set vehicle-to-vehicle distance indicator with respect to a preceding vehicle in vehicle-to-vehicle distance control while reducing any sense of discomfort felt by an occupant.

### BRIEF DESCRIPTION OF THE DRAWINGS

FIG. 1 is a block diagram showing an example of an in-vehicle display device according to an embodiment.
FIG. 2 is a diagram showing an example of a display image of a set vehicle-to-vehicle distance indicator and the like on a display.
FIG. 3 is a diagram showing an example of a display image of the display when a host vehicle performs lane change.
FIG. 4 is a flowchart showing a flow of display processing of the set vehicle-to-vehicle distance indicator, which is performed in the in-vehicle display device.

### DETAILED DESCRIPTION

Hereinafter, an exemplary embodiment will be described with reference to drawings. In each figure, the same or corresponding elements are denoted by the same reference numerals, and duplicate descriptions will not be repeated.

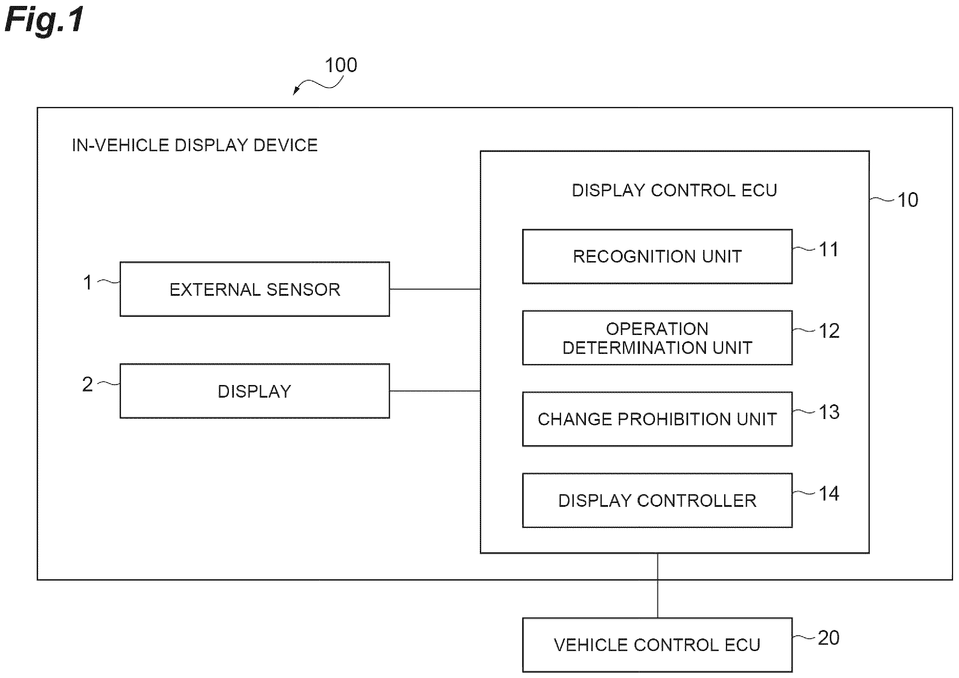

An in-vehicle display device 100 shown in FIG. 1 is a device that is mounted in a vehicle (hereinafter, referred to as a host vehicle) such as a passenger car or a freight car and that performs image display according to a peripheral situation of the host vehicle. The host vehicle has a function of performing vehicle-to-vehicle distance control of controlling a vehicle speed of the host vehicle such that a vehicle-to-vehicle distance between the host vehicle and a preceding vehicle that travels immediately ahead of the host vehicle in a traveling lane of the host vehicle is a set vehicle-to-vehicle distance (target vehicle-to-vehicle distance). The vehicle-to-vehicle distance control may be implemented by a driving assistance function such as adaptive cruise control (ACC), or may be implemented by an autonomous driving function including the vehicle-to-vehicle distance control. The set vehicle-to-vehicle distance in the vehicle-to-vehicle distance control is a set value that serves as a reference for controlling the vehicle speed of the host vehicle with respect to the preceding vehicle traveling ahead of the host vehicle. The in-vehicle display device 100 displays a set vehicle-to-vehicle distance indicator indicating the set vehicle-to-vehicle distance on the in-vehicle display 2 in the host vehicle capable of executing the vehicle-to-vehicle distance control.

The in-vehicle display device 100 includes a display control electronic control unit (ECU) 10 that comprehensively manages the device. The display control ECU 10 is an electronic control unit having a central processing unit (CPU) and a storage unit. The storage unit is, for example, a read only memory (ROM), a random access memory (RAM), or an electrically erasable programmable read-only memory (EEPROM). In the display control ECU 10, for example, various functions are implemented by the CPU executing a program stored in the storage unit. The display control ECU 10 may include a plurality of electronic units.

An external sensor 1, a display 2, and a vehicle control ECU 20 are connected to the display control ECU 10. The external sensor 1 includes at least one of a camera and a radar sensor. The camera is an imaging device that captures images of an external situation of the host vehicle. The camera is provided, for example, on a rear side of a windshield of the host vehicle, and captures images of the situation ahead of the host vehicle. The camera transmits a captured image related to the external situation of the host vehicle to the display control ECU 10.

The radar sensor is a detection device that detects an object around the host vehicle by using radio waves (for example, millimeter waves) or light. The radar sensor includes, for example, a millimeter wave radar or a light detection and ranging (LiDAR). The radar sensor transmits information on the detected object to the display control ECU 10.

The display 2 is a display device provided in a vehicle cabin of the host vehicle. The display 2 may be a center display, a multi information display (MID), or a head up display (HUD). The display 2 displays various information in response to a control signal from the display control ECU 10.

The vehicle control ECU 20 is an electronic unit that controls the driving assistance function or the autonomous driving function of the host vehicle. Here, detailed description of the driving assistance function and the autonomous driving function will be omitted. The vehicle control ECU 20 stores a set vehicle-to-vehicle distance set by a user of the host vehicle. The user is, for example, a driver. When the host vehicle is a fully autonomous driving vehicle, the user does not have to be a driver but may be an occupant. The vehicle control ECU 20 can execute the vehicle-to-vehicle distance control of controlling the vehicle speed such that the vehicle-to-vehicle distance with the preceding vehicle is the set vehicle-to-vehicle distance.

Next, a functional configuration of the display control ECU 10 will be described. The display control ECU 10 functionally includes a recognition unit 11, an operation determination unit 12, a change prohibition unit 13, and a display controller 14.

The recognition unit 11 recognizes other vehicles around the host vehicle and lane markings of a traveling lane of a road on which the host vehicle travels, based on a detection result of the external sensor 1. Here, the recognition unit 11 detects a preceding vehicle traveling ahead of the host vehicle as the other vehicle around the host vehicle. The recognition unit 11 can detect the other vehicle based on, for example, a detection result of the millimeter wave radar or the LiDAR included in the external sensor 1. In addition, the recognition unit 11 can recognize the lane markings using a known image processing technique based on the captured image of the camera included in the external sensor 1. The lane markings of the traveling lane of the road recognized by the recognition unit 11 include lane markings of a host lane in which the host vehicle travels and lane markings of an adjacent lane that is adjacent to the host lane.

The operation determination unit 12 determines whether or not the host vehicle is performing a lane change operation. The lane change operation is an operation of changing a lane in which the host vehicle travels from the host lane to the adjacent lane. The lane change operation includes at least one of an operation of the host vehicle crossing the lane marking, an operation of a turn signal lever of the host vehicle, and a start of execution of lane change control of automatically performing the lane change.

The operation determination unit 12 can determine, for example, the presence or absence of the operation of the host vehicle crossing the lane marking, based on a recognition result of the recognition unit 11. The operation determination unit 12 can determine, for example, that the turn signal lever of the host vehicle has been operated, based on a detection result of a turn signal switch that detects the operation of the turn signal lever. The operation determination unit 12 can, for example, acquire a signal related to the execution of the lane change control from the vehicle control ECU 20 and determine that the execution of the lane change control of automatically performing the lane change has been started, based on the acquired signal.

When the operation determination unit 12 determines that the lane change operation is being performed, the change prohibition unit 13 prohibits the change of the set vehicle-to-vehicle distance in the vehicle-to-vehicle distance control until the lane change of the host vehicle is completed. The change prohibition unit 13 can determine whether or not the lane change has been completed, based on a position of the host vehicle relative to the lane markings, or the like.

Here, the set vehicle-to-vehicle distance in the vehicle-to-vehicle distance control can be changed by the occupant of the host vehicle even while the vehicle-to-vehicle distance control is being executed by the vehicle control ECU 20 in a state where the host vehicle is traveling. The change prohibition unit 13 prohibits the change of the set vehicle-to-vehicle distance by issuing an instruction to the vehicle control ECU 20 to prohibit the change of the set vehicle-to-vehicle distance until the lane change of the host vehicle is completed. When the vehicle control ECU 20 receives the instruction from the change prohibition unit 13, the vehicle control ECU 20 prohibits the change of the set vehicle-to-vehicle distance until the lane change of the host vehicle is completed.

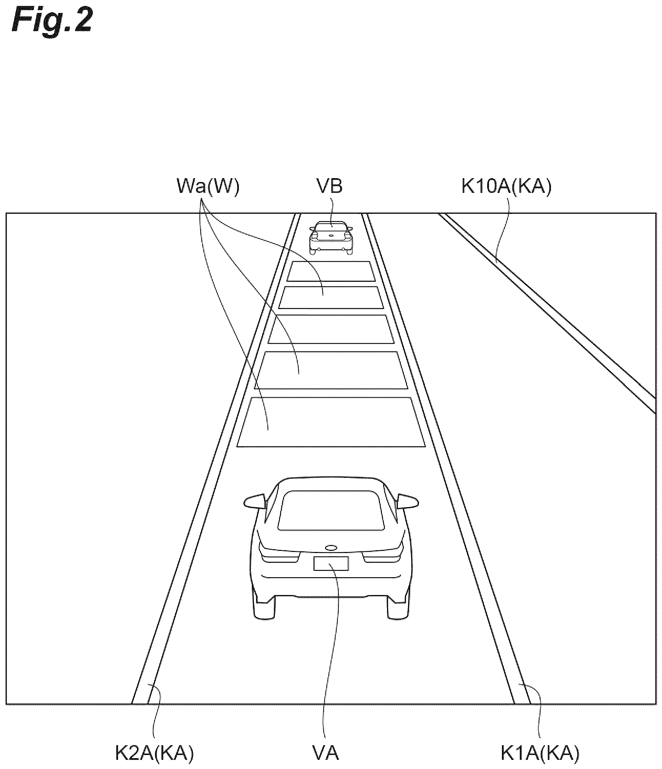

The display controller 14 has a function of displaying a host vehicle icon indicating the host vehicle and lane markings of the traveling lane on the display 2. The lane markings of the traveling lane displayed by the display controller 14 are the lane markings recognized by the recognition unit 11. For example, as shown in FIG. 2, the display controller 14 displays lane markings KA on the display 2 and also displays a host vehicle icon VA indicating the host vehicle. The display controller 14 displays the host vehicle icon VA and the lane markings KA in a manner that shows the host vehicle and the lane markings as viewed from behind and diagonally above the host vehicle.

For example, in the example shown in FIG. 2, as the lane markings KA displayed on the display 2, a lane marking K1A corresponding to a lane marking on a right side of the host lane in which the host vehicle travels and a lane marking K2A corresponding to a lane marking on a left side of the host lane are displayed. The host lane is represented by an area between the lane marking K1A and the lane marking K2A. In addition, in the example shown in FIG. 2, a lane marking K10A of an adjacent lane that is adjacent to the right side of the host lane is also displayed as the lane markings KA displayed on the display 2. The adjacent lane is represented by an area between the lane marking K1A and the lane marking K10A.

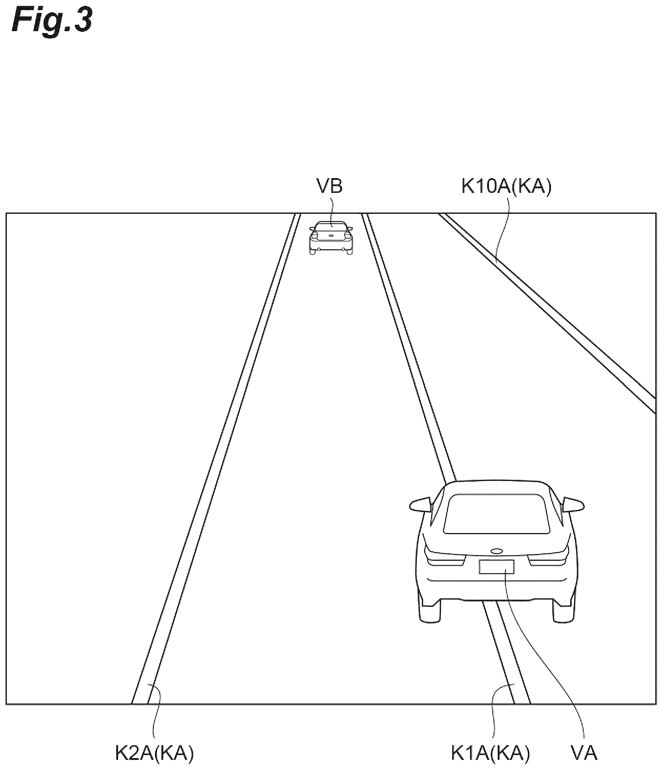

The host vehicle may perform lane change. In this case, for example, as shown in FIG. 3, the display controller 14 changes relative display positions of the host vehicle icon VA and the lane markings KA (here, particularly, the lane markings K1A and K2A of the host lane) in response to the lane change of the host vehicle. FIG. 3 shows a display screen example of the display 2 when the host vehicle performs the lane change to the adjacent lane on the right side from the state shown in FIG. 2.

In FIG. 3, the lane markings KA are fixed on a screen of the display 2, and the host vehicle icon VA is moved to the right side on the screen of the display 2. The present disclosure is not limited to this, and it is sufficient to show the state in which the host vehicle is performing the lane change by relatively moving the host vehicle icon VA and the lane markings KA.

When the recognition unit 11 detects another vehicle traveling ahead of the host vehicle, the display controller 14 displays an icon corresponding to the other vehicle on the display 2. For example, as shown in FIG. 2, when a preceding vehicle traveling in the host lane ahead of the host vehicle is recognized, the display controller 14 displays a preceding vehicle icon VB corresponding to the preceding vehicle on the display 2.

The display controller 14 displays a set vehicle-to-vehicle distance indicator W at a position in front of the host vehicle icon VA on the display 2. The set vehicle-to-vehicle distance indicator W is a display corresponding to the set vehicle-to-vehicle distance used when the vehicle control ECU 20 performs the vehicle-to-vehicle distance control. The display controller 14 can acquire information on the set vehicle-to-vehicle distance in the vehicle-to-vehicle distance control from the vehicle control ECU 20. The set vehicle-to-vehicle distance indicator W is displayed in front of the host vehicle icon VA with a length corresponding to the set vehicle-to-vehicle distance. The display controller 14 displays the set vehicle-to-vehicle distance indicator W when the vehicle-to-vehicle distance control is executed by the vehicle control ECU 20. In addition, the display controller 14 may be configured to display the set vehicle-to-vehicle distance indicator W when the vehicle-to-vehicle distance control is executed by the vehicle control ECU 20 and a preceding vehicle ahead of the host vehicle is recognized.

In FIG. 2, as an example, a plurality of horizontal bars Wa constituting the set vehicle-to-vehicle distance indicator W are displayed in front of the host vehicle icon. As the number of the horizontal bars Wa increases, the set vehicle-to-vehicle distance between the preceding vehicle and the host vehicle in the vehicle-to-vehicle distance control is longer. The vehicle-to-vehicle distance control with respect to the preceding vehicle is performed for the preceding vehicle traveling ahead of the host vehicle in the host lane in which the host vehicle travels. Therefore, as shown in FIG. 2, on the display 2, the set vehicle-to-vehicle distance indicator W is displayed between the lane marking K1A and the lane marking K2A corresponding to the host lane in which the host vehicle travels. In addition, although a case in which the set vehicle-to-vehicle distance indicator is represented by using a plurality of horizontal bars has been described as an example, the set vehicle-to-vehicle distance indicator is not limited to being represented by using the plurality of horizontal bars (rectangles). The set vehicle-to-vehicle distance indicator may be represented by a display of a shape other than the plurality of horizontal bars.

When the operation determination unit 12 determines that the lane change operation is being performed, the display controller 14 does not display the set vehicle-to-vehicle distance indicator until the lane change is completed, even if the vehicle-to-vehicle distance control is being executed by the vehicle control ECU 20. That is, the vehicle control ECU 20 can continue to perform the vehicle-to-vehicle distance control before and after the lane change even when the host vehicle performs the lane change.

As a result, for example, as shown in FIG. 3, even in a situation where the host vehicle icon VA crosses the lane marking KA due to the lane change of the host vehicle during the execution of the vehicle-to-vehicle distance control, the set vehicle-to-vehicle distance indicator W is not displayed on the display 2 until the lane change is completed. The display controller 14 can determine whether or not the lane change has been completed, based on the position of the host vehicle with respect to the lane markings, or the like.

In addition, when the operation determination unit 12 determines that the lane change operation is being performed, the display controller 14 displays, on the display 2, a change-unavailable indicator indicating that the set vehicle-to-vehicle distance cannot be changed in the vehicle-to-vehicle distance control. Displaying the change-unavailable indicator on the display 2 may be, for example, displaying a character or an icon indicating that the set vehicle-to-vehicle distance cannot be changed on the display 2.

The display controller 14 may display the change-unavailable indicator on the display 2 when the occupant of the host vehicle performs an operation of changing the set vehicle-to-vehicle distance while the set vehicle-to-vehicle distance indicator is not displayed because it is determined that the lane change operation is being performed. In addition, the display controller 14 may display the change-unavailable indicator and output a voice or an alarm sound from a speaker or the like.

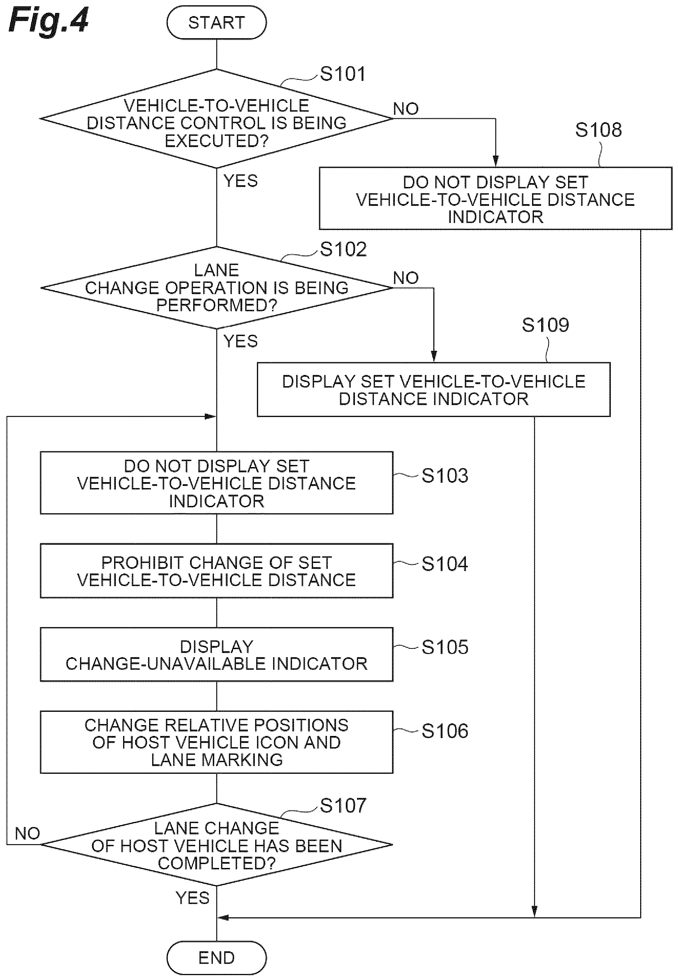

Next, a flow of display processing of the set vehicle-to-vehicle distance indicator performed in the in-vehicle display device 100 will be described with reference to a flowchart shown in FIG. 4. In the processing shown in FIG. 4, after the processing ends, the processing is restarted from the start after a predetermined time has elapsed. In addition, the display controller 14 displays the host vehicle icon VA and the lane markings KA on the display 2. When the preceding vehicle is detected, the display controller 14 displays the preceding vehicle icon VB on the display 2. In the following, display processing of the set vehicle-to-vehicle distance indicator W will be mainly described.

As shown in FIG. 4, the display controller 14 determines whether or not the vehicle-to-vehicle distance control is being executed by the vehicle control ECU 20 (S101). When the vehicle-to-vehicle distance control is not being executed (S101: NO), the display controller 14 does not display the set vehicle-to-vehicle distance indicator W on the display 2 (S108). In this case, the display controller 14 displays the host vehicle icon VA, the lane markings KA, and the like. Thereafter, the processing proceeds to the end.

When the vehicle-to-vehicle distance control is being executed (S101: YES), the operation determination unit 12 determines whether or not the host vehicle is performing the lane change operation (S102). When the lane change operation is not being performed (S102: NO), the display controller 14 displays the set vehicle-to-vehicle distance indicator W in front of the host vehicle icon VA on the display 2 (S109). As described above, the display controller 14 may display the set vehicle-to-vehicle distance indicator W when the vehicle-to-vehicle distance control is executed by the vehicle control ECU 20 and the preceding vehicle is detected. Thereafter, the processing proceeds to the end.

When the lane change operation is being performed (S102: YES), the display controller 14 does not display the set vehicle-to-vehicle distance indicator W on the display 2 (S103). The change prohibition unit 13 instructs the vehicle control ECU 20 to prohibit the change of the set vehicle-to-vehicle distance in the vehicle-to-vehicle distance control (S104). As a result, for example, the occupant is prohibited from changing the set vehicle-to-vehicle distance. The display controller 14 displays the change-unavailable indicator indicating that the set vehicle-to-vehicle distance cannot be changed on the display 2 (S105).

The display controller 14 changes the relative display positions of the host vehicle icon VA and the lane markings KA on the display 2 in response to the lane change of the host vehicle (S106). The display controller 14 determines whether or not the lane change of the host vehicle has been completed (S107). When the lane change has not been completed (S107: NO), the in-vehicle display device 100 performs the processing from S103. When the lane change has been completed (S107: YES), the processing proceeds to the end.

As described above, when it is determined that the host vehicle is performing the lane change operation, the in-vehicle display device 100 does not display the set vehicle-to-vehicle distance indicator W on the display 2 until the lane change is completed. That is, when the host vehicle icon VA is crossing the lane marking KA of the traveling lane on the display 2, the set vehicle-to-vehicle distance indicator W is not displayed in front of the host vehicle icon VA. Then, when the lane change of the host vehicle is completed, the in-vehicle display device 100 displays the set vehicle-to-vehicle distance indicator W in front of the host vehicle icon VA. As a result, the in-vehicle display device 100 can display the set vehicle-to-vehicle distance indicator W with respect to the preceding vehicle in the vehicle-to-vehicle distance control while reducing any sense of discomfort felt by the occupant.

When it is determined that the host vehicle is performing the lane change operation, the display controller 14 does not display the set vehicle-to-vehicle distance indicator until the lane change is completed, even if the vehicle control ECU 20 is executing the vehicle-to-vehicle distance control. In this case, even in a state where the set vehicle-to-vehicle distance indicator related to the vehicle-to-vehicle distance control is not displayed on the display 2, the vehicle control ECU 20 continues to perform the vehicle-to-vehicle distance control.

The operation determination unit 12 determines the presence or absence of at least one of the operation of the host vehicle crossing the lane marking, the operation of the turn signal lever of the host vehicle, and the start of execution of the lane change control, as the lane change operation. As a result, the operation determination unit 12 can more appropriately determine whether or not the host vehicle is performing the lane change operation.

In a state where the set vehicle-to-vehicle distance indicator W is not displayed on the display 2, the occupant of the host vehicle cannot change the set vehicle-to-vehicle distance while looking at the set vehicle-to-vehicle distance indicator W. Therefore, when it is determined that the host vehicle is performing the lane change operation and the set vehicle-to-vehicle distance indicator W is not displayed, the change prohibition unit 13 prohibits the change of the set vehicle-to-vehicle distance until the lane change is completed and the set vehicle-to-vehicle distance indicator is displayed. As a result, the in-vehicle display device 100 can prevent the set vehicle-to-vehicle distance from being unintentionally set to a value not intended by the occupant of the host vehicle when the occupant attempts to perform the setting change of the set vehicle-to-vehicle distance in a state where the set vehicle-to-vehicle distance indicator W is not displayed.

When it is determined that the host vehicle is performing the lane change operation, the display controller 14 displays, on the display 2, the change-unavailable indicator indicating that the set vehicle-to-vehicle distance cannot be changed. In this case, the occupant of the host vehicle can recognize that the set vehicle-to-vehicle distance cannot be changed in a state where the set vehicle-to-vehicle distance indicator is not displayed.

Although various embodiments of the present disclosure have been described above, the present disclosure is not limited to the above embodiments. For example, the display of the host vehicle icon and the lane markings on the display 2 shown in FIG. 2 and FIG. 3 is an example, and is not limited to, for example, a view of the host vehicle and the lane markings as viewed from behind and diagonally above the host vehicle. For example, a view (plan view) of the host vehicle and the lane markings as viewed from above may be displayed on the display 2.

## Claims

1. An in-vehicle display device that displays, on an in-vehicle display, a set vehicle-to-vehicle distance indicator indicating a set vehicle-to-vehicle distance in a host vehicle capable of executing vehicle-to-vehicle distance control of controlling a vehicle speed such that a vehicle-to-vehicle distance with a preceding vehicle is the set vehicle-to-vehicle distance, the in-vehicle display device comprising:
an operation determination unit configured to determine whether or not a lane change operation that is an operation of changing a lane in which the host vehicle travels from a host lane to an adjacent lane is being performed; and
a display controller having a function of displaying, on the display, a host vehicle icon indicating the host vehicle, the set vehicle-to-vehicle distance indicator displayed in front of the host vehicle icon, and a lane marking of a traveling lane, the display controller being configured to change relative display positions of the host vehicle icon and the lane marking in response to lane change of the host vehicle,
wherein the display controller is configured not to display the set vehicle-to-vehicle distance indicator until the lane change is completed when the operation determination unit determines that the lane change operation is being performed.

2. The in-vehicle display device according to claim 1,
wherein the display controller is configured not to display the set vehicle-to-vehicle distance indicator until the lane change is completed, even if the vehicle-to-vehicle distance control is being executed when the operation determination unit determines that the lane change operation is being performed.

3. The in-vehicle display device according to claim 1,
wherein the lane change operation includes at least one of an operation of the host vehicle crossing the lane marking, an operation of a turn signal lever of the host vehicle, and a start of execution of lane change control of automatically performing the lane change.

4. The in-vehicle display device according to claim 1, further comprising:
a change prohibition unit configured to, when the operation determination unit determines that the lane change operation is being performed, prohibit change of the set vehicle-to-vehicle distance until the lane change is completed.

5. The in-vehicle display device according to any one of claims 1 to 4,
wherein the display controller is configured to, when the operation determination unit determines that the lane change operation is being performed, display a change-unavailable indicator indicating that the set vehicle-to-vehicle distance is not changeable.
